# FASCICULE DE BREVET EUROPEEN

(11) **EP 4 341 631 B1**
(45) Date de publication et mention de la délivrance du brevet: **12.03.2025**
(21) Numéro de dépôt: 22721674.4
(22) Date de dépôt: 07.04.2022
(51) Int. Cl.: F28D 1/00

(54) **SYSTEME D'ECHANGE THERMIQUE**
WÄRMETAUSCHERSYSTEM
HEAT EXCHANGE SYSTEM

(30) Priorité: 20.05.2021 FR 2105250
(43) Date de publication de la demande: 27.03.2024
(73) Titulaire: VALEO SYSTEMES THERMIQUES, 78320 Le Mesnil Saint-Denis (FR)
(72) Inventeur: TOURNOIS, Remi, 78322 Le Mesnil-Saint-Denis Cedex (FR); BIREAUD, Fabien, 78322 Le Mesnil-Saint-Denis Cedex (FR); CAPARROS, Mathieu, 78322 Le Mesnil-Saint-Denis Cedex (FR); TRINDADE, Jose, 78322 Le Mesnil-Saint-Denis Cedex (FR)
(74) Mandataire: Valeo Systèmes Thermiques
(86) Numéro de dépôt international: PCT/EP2022/059262
(87) Numéro de publication internationale: WO 2022/242955

(56) Documents cités:
- DE-A1- 102019 216 578
- US-A1- 2004 188 061
- US-A1- 2016 001 629
- US-B2- 9 091 468
- ANONYMOUS: "Assembly snap feature", RESEARCH DISCLOSURE, KENNETH MASON PUBLICATIONS, HAMPSHIRE, UK, GB, vol. 476, no. 83, 1 December 2003 (2003-12-01), XP007133251, ISSN: 0374-4353

## Description

Le domaine de la présente invention est celui des systèmes d'échange thermique disposés sur au moins un circuit de distribution de fluide et comportant une pluralité d'échangeurs de chaleur, chacun étant apte à réaliser un échange de calories entre un flux d'air traversant le système d'échange thermique et un fluide circulant dans cet échangeur de chaleur. En particulier, la présente invention se rapporte à un système d'échange thermique tel que défini par le préambule de la revendication 1, et tel qu'illustré par le document US2004/188061 A1.

Il est connu d'agencer en face avant d'un véhicule un tel système d'échange thermique pour que les échangeurs de chaleur qui le composent soient successivement traversés par un flux d'air frais provenant de l'extérieur du véhicule. Le système d'échange thermique peut comporter notamment un radiateur formant partie d'un circuit de refroidissement d'un moteur à combustion ou d'un moteur électrique ainsi que ses accessoires du véhicule par échange de calories entre le flux d'air frais et un fluide de refroidissement circulant en son sein et un condenseur formant partie d'une boucle de régulation thermique de l'habitacle du véhicule et apte à assurer un échange de chaleur entre un fluide réfrigérant circulant en son sein et le flux d'air frais. Il est également connu d'associer au condenseur un sous-refroidisseur fluidiquement connecté au condenseur au moyen d'une bouteille de stockage de fluide réfrigérant en phase liquide, le sous-refroidisseur formant également partie de la boucle de régulation thermique de l'habitacle et assurant le sous-refroidissement du fluide réfrigérant en sortie de la bouteille de stockage.

Un agencement connu consiste à disposer le radiateur, le condenseur et le sous-refroidisseur en parallèle les uns des autres, perpendiculairement au sens de circulation principal de l'air frai venant de l'extérieur du véhicule. Dans cet empilement, le sous-refroidisseur, présentant une dimension verticale inférieure à celle du condenseur, est l'échangeur de chaleur disposé le plus proche d'une ouverture de la calandre avant du véhicule, en recouvrement partiel du condenseur, et le condenseur est disposé entre le radiateur et le sous-refroidisseur. Un tel agencement du système d'échange thermique, s'il est particulièrement efficace en termes d'encombrement, présente cependant l'inconvénient d'être difficile à assembler. De manière plus précise, l'assemblage actuel du système d'échange thermique, avec notamment un radiateur fixé sur le véhicule et servant de support au condenseur et servant par ailleurs de support au sous-refroidisseur, est fastidieux et peut manquer de précision notamment du fait de la multiplicité des zones de fixation du support qui doivent coopérer respectivement avec le condenseur et le sous-refroidisseur, et peut donc être amélioré.

La présente invention s'inscrit dans ce contexte et vise à répondre aux inconvénients précédemment cités. A cet effet, l'invention consiste en un système d'échange thermique comprenant au moins un support, un premier échangeur de chaleur et un deuxième échangeur de chaleur, le premier échangeur de chaleur et le deuxième échangeur de chaleur s'étendant chacun dans un plan principal transversal et vertical, le premier échangeur de chaleur étant disposé, suivant une direction longitudinale du système d'échange thermique, entre le support et le deuxième échangeur de chaleur, chacun du premier échangeur de chaleur et du deuxième échangeur de chaleur étant fixé sur le support via des moyens de fixation parmi lesquels au moins une languette portée par chacun de ces échangeurs et configurée pour coopérer avec une patte de fixation du support, le système d'échange thermique étant caractérisé en ce que le premier échangeur de chaleur comprend une première languette et le deuxième échangeur de chaleur comprend une deuxième languette, la première languette et la deuxième languette s'étendant chacune depuis une extrémité transversale respectivement du premier échangeur de chaleur et du deuxième échangeur de chaleur et en regard l'une de l'autre, chacune de la première languette et de la deuxième languette coopérant avec une patte de fixation commune du support.

Le système d'échange thermique peut notamment être logé en regard d'une calandre avant d'un véhicule, ici automobile. Le support peut être un radiateur formant partie d'un circuit de refroidissement du véhicule, le radiateur comportant une surface d'échange, au sein de laquelle un fluide de refroidissement et un flux d'air traversant le système d'échange thermique échangent des calories, et des collecteurs latéraux pour la distribution appropriée du fluide de refroidissement. La patte de fixation commune du support est alors une patte de fixation solidaire du radiateur et plus particulièrement de l'un de ces collecteurs latéraux. Le premier échangeur peut être un condenseur formant partie d'une boucle de régulation thermique de l'habitacle et destiné à refroidir un fluide réfrigérant circulant en son sein et dans cette boucle au moyen du flux d'air traversant successivement les échangeurs et le support. Le deuxième échangeur peut être un élément de sous-refroidissement, ou sous-refroidisseur, disposé fluidiquement à la suite du condenseur, après la bouteille forçant la sortie liquide sur la boucle de régulation thermique, le sous-refroidisseur étant destiné à effectuer un sous-refroidissement du fluide réfrigérant sortant du condenseur. Dans ce contexte, le condenseur et le sous-refroidisseur sont fluidiquement connectés l'un à l'autre, par exemple au moyen d'un bouteille de stockage destinée à récupérer le fluide réfrigérant en sortie du condenseur pour le distribuer au sous-refroidisseur.

Le premier échangeur de chaleur et le deuxième échangeur de chaleur sont tous les deux fixés sur le support, notamment au moyen de la patte de fixation commune. La première languette et la deuxième languette s'étendent chacune en regard l'une de l'autre, c'est-à-dire depuis une même extrémité transversale du système d'échange thermique afin qu'elles soient aptes à coopérer avec cette patte de fixation commune.

On tire avantage d'un tel agencement de l'invention en ce qu'on limite l'encombrement des moyens de fixations du premier échangeur de chaleur et du deuxième échangeur de chaleur, lesdites languettes coopérant avec la même patte de fixation du support.

Il convient par ailleurs de comprendre que les deux échangeurs de chaleur sont par ailleurs fixés sur le support par des moyens de fixation additionnels, en d'autres zones du système d'échange thermique, et notamment des moyens de vissage.

Selon une caractéristique de l'invention, chacune de la première languette et de la deuxième languette comprend une base et une paroi de fixation, la base de la première languette et la base de la deuxième languette étant respectivement solidaire du premier échangeur de chaleur et du deuxième échangeur de chaleur, les parois de fixation s'étendant chacune depuis leur base respective et de telle sorte qu'elles coopèrent avec la patte de fixation commune du support.

Selon une caractéristique de l'invention, la paroi de fixation de la deuxième languette comprend une zone coudée qui s'étend depuis sa base et une zone de fixation qui s'étend depuis la zone coudée, à l'opposé de la base, la zone de fixation s'étendant dans un plan de fixation parallèle et à distance du plan principal transversal et vertical du deuxième échangeur de chaleur.

Selon une caractéristique de l'invention, la zone coudée s'étend vers le support du système d'échange thermique. De manière plus précise, la zone coudée s'étend dans un plan de zone coudée qui coupe le plan de fixation de la zone de fixation de la deuxième languette.

Il résulte de ce qui précède que le plan de fixation de la zone de fixation est compris longitudinalement entre le plan principal du premier échangeur de chaleur et le plan principal du deuxième échangeur de chaleur.

Selon une caractéristique de l'invention, la paroi de fixation de la première languette et la zone de fixation de la paroi de fixation de la deuxième languette s'étendent chacune dans un plan parallèle aux plans principaux du premier échangeur de chaleur et du deuxième échangeur de chaleur. On comprend alors que la paroi de fixation de la première languette et la zone de fixation de la paroi de fixation de la deuxième languette s'étendent dans des plans qui sont parallèles l'un de l'autre.

Selon une caractéristique de l'invention, la patte de fixation du support s'étend depuis une extrémité transversale du support suivant la direction longitudinale et comprend au moins une première rainure et une deuxième rainure, aptes à loger respectivement au moins une partie de la première languette et au moins une partie de la deuxième languette.

On comprend que la patte de fixation du support s'étend sensiblement perpendiculairement aux languettes. La patte de fixation s'étend longitudinalement au moins jusqu'à la zone de fixation de la paroi de fixation de la deuxième languette. En d'autres termes la patte de fixation s'étend longitudinalement au moins entre le plan principal du premier échangeur de chaleur et le plan principal du deuxième échangeur de chaleur.

Selon une caractéristique de l'invention, la patte de fixation présente une extrémité libre, à l'opposé du support, qui s'étend entre le plan principal du premier échangeur de chaleur et le plan principal du deuxième échangeur de chaleur. Il est ainsi notable que la dimension longitudinale de la patte de fixation est limitée, afin qu'elle n'aille pas jusqu'au plan principal du deuxième échangeur de chaleur. De la sorte, la patte de fixation peut présenter une rigidité suffisante pour participer au maintien du premier échangeur de chaleur 4 et du deuxième échangeur de chaleur 6 sur le support 2.

Selon une caractéristique de l'invention, la première rainure et la deuxième rainure sont configurées pour coopérer respectivement avec la paroi de fixation de la première languette et la zone de fixation de la paroi de fixation de la deuxième languette.

Selon une caractéristique de l'invention, on définit une première extrémité verticale et une deuxième extrémité verticale du système d'échange thermique, opposées l'une à l'autre suivant la direction verticale, chacune de la première rainure et de la deuxième rainure de la patte de fixation commune du support comprenant une ouverture tournée vers une même extrémité verticale du système d'échange thermique.

Plus particulièrement, la première extrémité verticale est l'extrémité la plus éloignée d'un bas de caisse du véhicule tandis que la deuxième extrémité verticale est l'extrémité la plus proche dudit bas de caisse, lorsque le système de traitement thermique est installé au sein du véhicule. Ainsi, selon un exemple de l'invention, les ouvertures de la première rainure et de la deuxième rainure sont tournées vers la première extrémité verticale, c'est-à-dire à l'opposé du sol, et les échangeurs de chaleur sont montés sur le support par un mouvement vertical du haut vers le bas.

Selon une caractéristique de l'invention, au moins une parmi la première rainure et/ou la deuxième rainure de la patte de fixation comprend un ergot faisant saillie d'au moins une paroi participant à délimiter ladite première rainure et/ou ladite deuxième rainure, au moins une parmi la première languette et la deuxième languette comprenant une fente de réception apte à coopérer avec ledit ergot.

Chacune de la première rainure et de la deuxième rainure comprend une paroi de fond, opposée à son ouverture respective suivant la direction verticale. Ainsi, selon un exemple de l'invention, l'ergot peut faire saillie de la paroi de fond de l'une et/ou l'autre parmi la première rainure et la deuxième rainure de la patte de fixation.

On définit également un bord supérieur et un bord inférieur de chacune de la première languette et de la deuxième languette respectivement tournés vers la première extrémité verticale et la deuxième extrémité verticale du système d'échange thermique. La fente de réception est alors formée sur un des bords inférieurs de la première languette et/ou de la deuxième languette, au niveau des parois de fixation.

Selon une caractéristique de l'invention, la paroi de fixation de la première languette présente une première épaisseur et la zone de fixation de la paroi de fixation de la deuxième languette présente une deuxième épaisseur, chacune de la première épaisseur et de la deuxième épaisseur étant mesurée longitudinalement, la première épaisseur et la deuxième épaisseur étant différentes l'une de l'autre.

Selon une caractéristique de l'invention, la première rainure et la deuxième rainure présentent respectivement une première dimension longitudinale légèrement supérieure à la première épaisseur de la première languette et une deuxième dimension longitudinale légèrement supérieure à la deuxième épaisseur de la deuxième languette.

On comprend que les épaisseurs de languettes et les dimensions longitudinales des rainures forment un moyen de détrompage du montage des languettes dans les rainures de la patte de fixation. En d'autres termes, une telle caractéristique permet d'assurer un positionnement juste de chacune des languettes dans la rainure qui lui est destinée, et l'on s'assure ainsi que le premier échangeur de chaleur, le condenseur dans l'exemple qui a été évoqué précédemment, soit bien disposé entre le support, qui peut notamment être le radiateur, et le deuxième échangeur de chaleur, qui peut notamment être le sous-refroidisseur précédemment évoqué.

Par ailleurs, on entend par légèrement supérieur un différentiel qui permet l'insertion des languettes dans les rainures avec un minimum de jeu de montage.

Selon un exemple de l'invention, l'ensemble formé par la première épaisseur de la première languette et la première dimension longitudinale de la première rainure sont supérieures ou inférieures à l'ensemble formé par la deuxième épaisseur de la deuxième languette et la deuxième dimension longitudinale de la deuxième rainure.

Selon une caractéristique de l'invention, la patte de fixation commune du support comprend, à une extrémité libre opposée au support, une paroi d'extrémité qui participe à délimiter la deuxième rainure, la paroi d'extrémité comprenant au moins un doigt d'encliquetage déformable élastiquement agencé en travers de la deuxième rainure.

On entend par déformable élastiquement le fait que le doigt d'encliquetage est apte à se déformer puis à revenir dans sa position initiale sans rupture de sa matière. Le doigt d'encliquetage comprend notamment une surépaisseur tournée vers le support et disposée partiellement en travers de la deuxième rainure. La surépaisseur est destinée à être au contact du bord supérieur de la deuxième languette lorsque celle-ci loge dans la deuxième rainure. La surépaisseur peut par exemple comprendre un chanfrein tourné vers la première extrémité verticale du système d'échange thermique afin de faciliter le guidage et l'insertion de la deuxième languette dans la deuxième rainure.

Selon une caractéristique de l'invention, chacune des bases de chacune des languettes présente une épaisseur de base prise le long d'une droite parallèle à la direction longitudinale, l'épaisseur de base de chacune des bases de la première languette et de la deuxième languette présentant une valeur supérieure à celle respectivement de la première épaisseur de la paroi de fixation de la première languette et de la deuxième épaisseur de la zone de fixation de la paroi de fixation de la deuxième languette.

Selon une caractéristique de l'invention, la patte de fixation commune du support comprend une paroi de séparation qui s'étend entre la première rainure et la deuxième rainure, ladite paroi de séparation comprenant un bord d'extrémité tourné vers la première extrémité verticale du système d'échange thermique, ladite paroi de séparation présentant un chanfrein de bord d'extrémité formé à la jonction entre le bord d'extrémité et la face tournée vers la deuxième rainure de la patte de fixation.

Un tel chanfrein de bord d'extrémité facilite le guidage et l'insertion de la deuxième languette dans la deuxième rainure.

Selon une caractéristique de l'invention, on définit une première dimension verticale et une deuxième dimension verticale respectivement de la paroi de fixation de la première languette et de la paroi de fixation de la deuxième languette, la première dimension verticale étant différente de la deuxième dimension verticale.

Selon un exemple de l'invention, la première dimension verticale de la première languette est supérieure à la deuxième dimension verticale de la deuxième languette, de telle sorte que le bord supérieur de la deuxième languette loge dans la deuxième rainure au contact de la surépaisseur du doigt d'encliquetage, ce dernier étant dans sa position initiale non déformé. On comprend que la combinaison de la deuxième dimension verticale avec le doigt d'encliquetage forme un moyen de détrompage pour l'assemblage du système d'échange thermique.

Selon une caractéristique de l'invention, le support est un troisième échangeur de chaleur. Le troisième échangeur de chaleur peut être par exemple le radiateur.

Selon une caractéristique de l'invention, le premier échangeur de chaleur et le deuxième échangeur de chaleur comportent respectivement, à l'opposé transversalement des languettes, une première fixation additionnelle et une deuxième fixation additionnelle, la première fixation additionnelle et la deuxième fixation additionnelle étant aptes chacune à coopérer avec un moyen de fixation additionnel du support.

L'invention porte par ailleurs sur un procédé de montage du système d'échange thermique tel que précédemment décrit, procédé de montage au cours duquel à une première étape on dispose le premier échangeur de chaleur par une translation verticale le long du support de telle sorte que la première languette se loge au moins en partie dans la première rainure de la patte de fixation du support, et à une deuxième étape on dispose le deuxième échangeur de chaleur par translation verticale contre le premier échangeur de chaleur de telle sorte que la deuxième languette se loge au moins en partie dans la deuxième rainure de la patte de fixation du support.

De manière plus précise, à la première étape on translate verticalement le premier échangeur de chaleur le long du support de telle sorte que la fente de réception de la paroi de fixation de la première languette coopère avec l'ergot de la première rainure. Une fois le premier échangeur de chaleur disposé, à la deuxième étape on translate verticalement le deuxième échangeur de chaleur contre le premier échangeur de chaleur de telle sorte que la zone de fixation de la paroi de fixation de la deuxième languette vienne en contact du chanfrein de la surépaisseur du doigt d'encliquetage de la paroi d'extrémité de la patte de fixation, de telle sorte à déformer ledit doigt d'encliquetage dans un sens opposé au support. Par la suite le bord supérieur de la deuxième languette se loge sous la surépaisseur de telle sorte que le doigt d'encliquetage revienne à son état initial non déformé.

On tire avantage d'un tel montage du système d'échange thermique en ce qu'il est simplifié tout en améliorant la précision de la disposition des échangeurs de chaleur et du support les uns par rapport aux autres, en limitant le nombre de zones de réception des languettes des échangeurs de chaleur destinés à être fixés sur le support, et donc en limitant les chaines de côtes et les risques de montages contraignants pour les échangeurs de chaleur. On augmente ainsi la durabilité du montage. Par ailleurs, le montage des deux échangeurs de chaleur de manière verticale sur une même patte de fixation permet de faciliter l'assemblage par un opérateur.

D'autres caractéristiques, détails et avantages de l'invention ressortiront plus clairement à la lecture de la description donnée ci-après à titre indicatif en relation avec des dessins dans lesquels :
[Fig. 1] est une vue générale en perspective d'un système d'échange thermique selon l'invention comprenant au moins un support, un premier échangeur de chaleur et un deuxième échangeur de chaleur ;
[Fig. 2] est une vue de détails du système d'échange thermique de la figure 1, rendant visible une patte de fixation commune du support, configurée pour coopérer avec des languettes ici non visibles des deux échangeurs de chaleur ;
[Fig. 3] est une vue de détails du système d'échange thermique de la figure 1, rendant visible une première languette et une deuxième languette respectivement du premier échangeur de chaleur et du deuxième échangeur de chaleur, configurée pour coopérer avec la patte de fixation commune du support de la figure 2 ;
[Fig. 4] est une vue de détails de la coopération entre la première languette et la deuxième languette de la figure 3 avec la patte de fixation commune de la figure 2 ;
[Fig. 5] est une vue de détails du système d'échange thermique de la figure 1, rendant visible une première fixation additionnelle et une deuxième fixation additionnelle, respectivement du premier échangeur de chaleur et du deuxième échangeur de chaleur, qui coopèrent avec un moyen de fixation additionnel du support.

Il faut tout d'abord noter que les figures exposent l'invention de manière détaillée pour mettre en œuvre l'invention, lesdites figures pouvant bien entendu servir à mieux définir l'invention, le cas échéant.

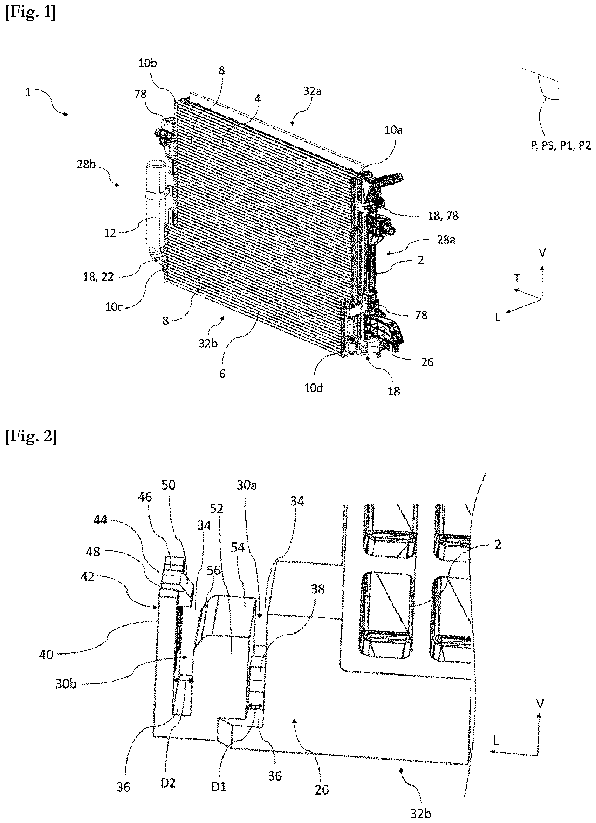

La figure 1 illustre un système d'échange thermique 1 selon l'invention comprenant au moins un support 2, un premier échangeur de chaleur 4 et un deuxième échangeur de chaleur 6. Un tel système d'échange thermique 1 est notamment destiné à être installé en face avant d'un véhicule automobile, à l'arrière d'une calandre par exemple, afin d'être traversé par un flux d'air lors du roulage dudit véhicule, le flux d'air traversant successivement les échangeurs de chaleur puis le support, perpendiculairement à leur plan principal d'allongement.

Selon un exemple de l'invention, le support 2 du système d'échange thermique 1 est un troisième échangeur de chaleur prenant ici la forme d'un radiateur assurant le refroidissement d'un moteur à combustion, d'un moteur électrique ou des accessoires du véhicule, et au sein duquel circule un fluide de refroidissement. De manière plus précise, le fluide de refroidissement est destiné à recevoir les calories émises par le moteur à combustion lors de son fonctionnement puis à échanger ces calories avec le flux d'air lors de sa circulation dans le radiateur, afin de retourner dans le moteur à combustion pour recommencer son action de récupération de calories.

Toujours selon un exemple de l'invention, le premier échangeur de chaleur 4 est un condenseur et le deuxième échangeur de chaleur 6 est un sous-refroidisseur, au sein desquels circule au moins en partie un fluide réfrigérant.

Ces deux échangeurs de chaleur 4, 6 et le support 2 sont de forme parallélépipédique et s'étendent chacun dans un plan principal P, à la fois transversal et vertical selon le référentiel L,V,T illustré sur les figures et dans lequel le flux d'air circule principalement selon la direction longitudinale L, perpendiculaire aux directions verticale V et transversal T. De manière plus précise, le support s'étend dans un plan de support PS, le premier échangeur de chaleur 4 s'étend dans un premier plan principal P1 et le deuxième échangeur de chaleur 6 s'étend dans un deuxième plan principal P2, lesdits plan PS, P1, P2 étant parallèles les uns aux autres.

Les échangeurs de chaleur 4, 6 et le support 2 sont partiellement superposés l'un par rapport à l'autre dans la direction longitudinale L, à savoir la direction de circulation principale du flux d'air, c'est-à-dire une direction perpendiculaire aux plans principaux P des échangeurs de chaleur 4, 6 et du support 2. De manière plus précise, le premier échangeur de chaleur 4 est disposé longitudinalement entre le support 2 et le deuxième échangeur de chaleur 6. Les échangeurs de chaleur 4, 6 et le support 2 sont alors superposés de telle sorte que le flux d'air provenant de l'extérieur du véhicule traverse successivement le deuxième échangeur de chaleur 6, le premier échangeur de chaleur 4, puis le support 2, lorsque le véhicule est en fonctionnement.

Chacun du premier échangeur de chaleur 4 et du deuxième échangeur de chaleur 6 comporte un faisceau de tubes 8 ou de plaques selon le type d'échangeur de chaleur, s'étendant principalement transversalement et formant une zone d'échange thermique où circule le fluide réfrigérant permettant l'échange de calories entre les échangeurs de chaleur 4, 6 et le flux d'air traversant lesdits échangeurs de chaleur 4, 6.

Le premier échangeur de chaleur 4 est délimité transversalement par une première paroi latérale 10a et une deuxième paroi latérale 10b, chaque paroi latérale 10a, 10b jouant respectivement le rôle de chambre de distribution de fluide en entrée des tubes ou plaques et le rôle de chambre collectrice de fluide en sortie des tubes ou plaques. La première paroi latérale 10a et la deuxième paroi latérale 10b sont positionnées respectivement à une première extrémité transversale 28a et une deuxième extrémité transversale 28b du système d'échange thermique 1.

Le deuxième échangeur de chaleur 6 présente des parois latérales similaires, avec une troisième paroi latérale 10c jouant le rôle de chambre de distribution de fluide et une quatrième paroi latérale 10d jouant le rôle de chambre collectrice de fluide, respectivement disposées à la deuxième extrémité transversale 28b et première extrémité transversale 28a du système d'échange thermique 1, étant entendu que la continuité de circulation de fluide réfrigérant du premier échangeur de chaleur 4 vers le deuxième échangeur de chaleur 6 implique que la troisième paroi latérale 10c du deuxième échangeur de chaleur 6 jouant le rôle de chambre de distribution de fluide soit disposée à la même deuxième extrémité transversale 28b du système d'échange thermique 1 que la chambre collectrice du premier échangeur de chaleur 4, situé au niveau de la deuxième paroi latérale 10b.

Afin de relier entre elles les portions de circuit réfrigérant respectivement comprises dans chacun du premier échangeur de chaleur 4 et du deuxième échangeur de chaleur 6, une bouteille déshydratante 12 est agencée le long d'une direction d'allongement verticale V et est rendue solidaire de brides de raccordement, non visibles, elles même solidaires de la deuxième paroi latérale 10b et de la troisième paroi latérale 10c. Par ailleurs, le premier échangeur de chaleur 4 comprend une entrée de fluide réfrigérant, non visible, formée sur sa première paroi latérale 10a, et le deuxième échangeur de chaleur 6 comprend une sortie de fluide réfrigérant, non visible, formée sur sa quatrième paroi latérale 10c.

Ainsi, le fluide réfrigérant entre dans le système d'échange thermique 1 par l'entrée de fluide réfrigérant située sur la première paroi latérale 10a du premier échangeur de chaleur 4 puis circule au sein de la structure du premier échangeur de chaleur 4 par le biais du faisceau de tubes 8 jusqu'à une sortie disposée dans la deuxième paroi latérale 10b du premier échangeur de chaleur 4. Le premier échangeur de chaleur 4 est ainsi configuré pour assurer un échange de calories entre le fluide réfrigérant circulant en son sein et le flux d'air le traversant.

Le fluide réfrigérant est ensuite conduit dans la bouteille déshydratante 12 configurée pour guider verticalement, selon sa direction d'allongement, le fluide réfrigérant et le ramener en sortie en direction du deuxième échangeur de chaleur 6 au niveau de la troisième paroi latérale 10c. Le fluide est alors apte à circuler à travers le faisceau de tubes du deuxième échangeur de chaleur 6, jusqu'à la sortie de fluide réfrigérant située sur la quatrième paroi latérale 10d.

L'entrée de fluide réfrigérant solidaire du premier échangeur de chaleur 4 et la sortie de fluide réfrigérant solidaire du deuxième échangeur de chaleur 6 sont destinées à être reliées à des tubulures de circulation de fluide du système d'échange thermique 1 ici non représentées.

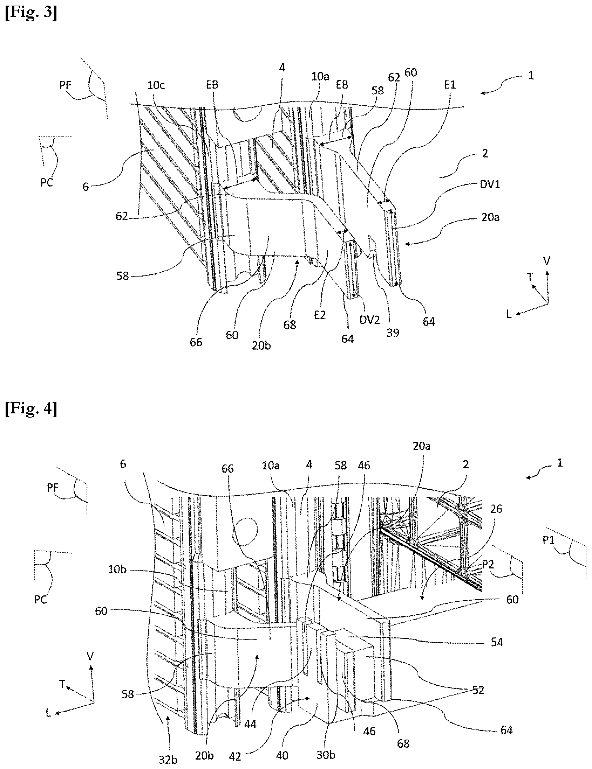

Le premier échangeur de chaleur 4 et le deuxième échangeur de chaleur 6 sont tous deux fixés sur le support 2 via des moyens de fixation 18. Les moyens de fixation 18 comprennent au moins une languette 20 de fixation et au moins une fixation additionnelle 22. De manière plus précise et tel que cela est visible aux figures 3 et 4, le premier échangeur de chaleur 4 comprend une première languette 20a de fixation et le deuxième échangeur de chaleur 6 comprend une deuxième languette 20b de fixation, chacune de la première languette 20a et de la deuxième languette 20b s'étendant respectivement depuis le premier échangeur de chaleur 4 et le deuxième échangeur de chaleur 6 au niveau de la première extrémité transversale 28a du système d'échange thermique. Dit autrement, chacune de la première languette 20a et de la deuxième languette 20b s'étend respectivement depuis une extrémité transversale du premier échangeur de chaleur 4 et depuis une extrémité transversale du deuxième échangeur de chaleur 6 longitudinalement en regard l'une de l'autre, au niveau de la première extrémité transversale 28a du système d'échange thermique. Selon l'exemple illustré de l'invention, la première languette 20a s'étend depuis la première paroi latérale 10a du premier échangeur de chaleur 4 et la deuxième languette 20b s'étend depuis la quatrième paroi latérale 10d du deuxième échangeur de chaleur 6, lesdites languettes 20a, 20b étant en regard l'une de l'autre.

Selon l'invention, chacune de la première languette 20a et de la deuxième languette 20b coopère avec une patte de fixation 26 commune du support 2 particulièrement visible aux figures 2 et 4.

La patte de fixation 26 du support 2 s'étend depuis une extrémité transversale du support 2 disposée au niveau de la première extrémité transversale 28a du système d'échange thermique 1, et elle s'étend sensiblement perpendiculairement au plan d'allongement principal du support 2, suivant la direction longitudinale L, de telle sorte que ladite patte de fixation 26 s'étende au moins en regard de la première paroi latérale 10a du premier échangeur de chaleur 4. Selon l'exemple de l'invention, la dimension longitudinale de la patte de fixation 26 est telle que l'extrémité libre de la patte de fixation, à l'opposé du support, est agencée longitudinalement entre le premier plan principal P1 du premier échangeur de chaleur 4 et le deuxième plan principal P2 du deuxième échangeur de chaleur 6.

Selon l'invention, la patte de fixation 26 comprend au moins une première rainure 30a et une deuxième rainure 30b, aptes à loger respectivement la première languette 20a et la deuxième languette 20b, une telle coopération étant exposée plus loin dans la description détaillée. Tel que cela est visible sur la figure 1, le système d'échange thermique 1 comprend une première extrémité verticale 32a et une deuxième extrémité verticale 32b opposées l'une à l'autre selon la direction verticale V du système d'échange thermique 1, la première extrémité verticale 32a étant destinée à être l'extrémité la plus éloignée d'un bas de caisse du véhicule lorsque le système d'échange thermique 1 est installé au sein du véhicule. Dans ce contexte, et tel que cela est notamment visible sur la figure 2, la première rainure 30a et la deuxième rainure 30b de la patte de fixation 26 comprennent chacune une ouverture 34 tournée vers la même extrémité verticale du système d'échange thermique 1, ici la première extrémité verticale 32a. On définit alors une paroi de fond 36 de chacune de la première rainure 30a et de la deuxième rainure 30b, chacune des parois de fond 36 étant opposée verticalement à l'ouverture 34 de sa rainure 30a, 30b respective.

Par ailleurs, dans l'exemple illustré de l'invention, chacune de la première rainure 30a et de la deuxième rainure 30b de la patte de fixation 26 est traversante, suivant la direction transversale T. En d'autres termes, chacune des rainures s'étend d'une extrémité transversale à l'autre de la patte de fixation 26.

Au moins une parmi la première rainure 30a et la deuxième rainure 30b de la patte de fixation 26 comprend un ergot 38 faisant saillie d'au moins une paroi participant à délimiter la première rainure 30a et/ou la deuxième rainure 30b. L'ergot 38 présente une forme complémentaire à celle d'une fente de réception 39, visible à la figure 3, formée sur un bord d'extrémité vertical d'une des languettes 20a, 20b, de manière à former un moyen de détrompage et assurer que la bonne languette soit positionnée dans la bonne rainure, la coopération entre les languettes 20a, 20b et la patte de fixation 26 étant exposée plus loin dans la suite de la description détaillée. Selon l'exemple de l'invention illustré, l'ergot 38 fait saillie de la paroi de fond 36 de la première rainure 30a, et tel que visible sur la figure 3, c'est la première languette 20a qui est équipé de la fente de réception 39.

La patte de fixation 26 comprend par ailleurs une paroi de séparation 52 qui s'étend entre la première rainure 30a et la deuxième rainure 30b et qui participe à délimiter chacune d'entre elles. La paroi de séparation 52 comprend notamment un bord d'extrémité 54 tourné vers la première extrémité verticale du système d'échange thermique et elle comprend un bord d'extrémité chanfreiné 56 qui s'étend transversalement à la jonction entre le bord d'extrémité 54 et la face participant à délimiter la deuxième rainure 30b de la patte de fixation 26. On comprend qu'un tel bord d'extrémité chanfreiné 56 de la paroi de séparation 52 permet de faciliter l'insertion de la deuxième languette 20b dans la deuxième rainure 30b de la patte de fixation 26.

Tel que cela est visible aux figures 2 et 4, la patte de fixation 26 comprend une paroi d'extrémité 40 qui s'étend à une extrémité libre 42 de la patte de fixation 26, opposée au support 2, et qui participe à délimiter la deuxième rainure 30b.

La paroi d'extrémité 40 comprend au moins un doigt d'encliquetage 44 déformable élastiquement agencé en travers de la deuxième rainure 30b. De manière plus précise, le doigt d'encliquetage 44 s'étend suivant la direction verticale V dans la paroi d'extrémité 40 et il est délimité transversalement par deux fentes verticales 46 formées dans la paroi d'extrémité 40 afin d'autoriser la déformation élastique du doigt d'encliquetage 44. On entend notamment par déformable élastiquement le fait que le doigt d'encliquetage 44 est apte à se déformer puis à revenir à sa position initiale sans rupture de sa matière.

Le doigt d'encliquetage 44 comprend par ailleurs, à son extrémité libre disposée à l'opposé de la paroi de fond 36 de la deuxième rainure 30b, une surépaisseur 48 qui est tournée vers le support 2 de telle sorte que ladite surépaisseur 48 soit agencée en travers de la deuxième rainure 30b et de telle sorte qu'elle réduise ainsi le passage en direction de la deuxième rainure pour la deuxième languette 20b. Le passage de la deuxième languette 20b tend ainsi à déformer le doigt d'encliquetage pour écarter de ce passage la surépaisseur 48, qui se déplace sous effort dans un sens opposé au support 2 et qui ne reprend sa position d'origine que lorsque la deuxième languette est complètement insérée dans la deuxième rainure 30b. La surépaisseur 48 peut présenter, tel qu'illustré notamment sur la figure 2, un chanfrein 50 qui s'étend transversalement et facilite le guidage et l'insertion de la deuxième languette 20b dans la deuxième rainure 30b.

La première languette 20a et la deuxième languette 20b ainsi que leur coopération avec la patte de fixation 26 vont maintenant être décrites plus en détail au moyen des figures 2 à 4.

La première languette 20a et la deuxième languette 20b comprennent chacune une base 58 et une paroi de fixation 60. La base 58 de la première languette 20a et la base 58 de la deuxième languette 20b sont respectivement solidaires de la première paroi latérale 10a du premier échangeur de chaleur 4 et de la quatrième paroi latérale 10d du deuxième échangeur de chaleur 6. Les parois de fixation 60 de chacune de la première languette 20a et de la deuxième languette 20b s'étendent chacune depuis leur base 58 respective et de telle sorte qu'elles coopèrent avec la patte de fixation 26 du support 2.

La paroi de fixation 60 de la première languette 20a s'étend depuis sa base 58 suivant la direction transversale T du système d'échange thermique et dans un plan principal qui est parallèle au premier plan principal du premier échangeur de chaleur 4.

La paroi de fixation 60 de la deuxième languette 20b comprend une zone coudée 66 qui s'étend depuis sa base 58 et une zone de fixation 68 qui s'étend depuis la zone coudée 66, à l'opposé de la base. On définit alors un plan de fixation PF dans lequel s'étend cette zone de fixation 68 et un plan de zone coudée PC dans lequel s'étend cette zone coudée 66. Le plan de fixation PF de la zone de fixation 68 est parallèle et à distance du deuxième plan principal P2 du deuxième échangeur de chaleur 6 tandis que le plan de zone coudée PC de la zone coudée 66 coupe le plan de fixation PF. Plus particulièrement, la zone coudée 66 s'étend depuis la base 58 vers le support 2 de telle sorte que la zone de fixation 68 de la paroi de fixation 60 de la deuxième languette 20b s'étend longitudinalement entre le premier plan principal P1 du premier échangeur de chaleur 4 et le deuxième plan principal P2 du deuxième échangeur de chaleur 6. En d'autres termes, la zone coudée 66 permet de rapprocher la zone de fixation 68 vers le support 2 afin que ladite zone de fixation 68 coopère avec la patte de fixation 26 du support 2.

Ainsi et tel que cela est visible à la figure 4, la paroi de fixation 60 de la première languette 20a de fixation coopère avec la première rainure 30a de la patte de fixation 26 et la zone de fixation 68 de la paroi de fixation 60 de la deuxième languette 20b coopère avec la deuxième rainure 30b de ladite patte de fixation 26.

Selon l'invention, la patte de fixation 26 commune à une languette d'un premier échangeur de chaleur et à une languette d'un deuxième échangeur présente deux logements distincts aptes à recevoir chacun l'une des deux languettes, et l'une des languettes est configurée pour venir se positionner dans un de ces logements malgré la dimension longitudinale compacte de la patte de fixation qui s'étend en regard d'un des échangeurs de chaleur mais pas en regard de l'autre, notamment pour des raisons d'encombrement et de rigidité de la patte de fixation.

En accord avec ce qui a été défini précédemment et notamment les première et deuxième extrémités verticales du système d'échange thermique, on définit un bord supérieur 62 et un bord inférieur 64 de la première languette 20a et de la deuxième languette 20b, le bord supérieur 62 étant tourné vers la première extrémité verticale tandis que le bord inférieur 64 est tourné vers la deuxième extrémité verticale 32b du système d'échange thermique 1.

Tel que cela est particulièrement visible à la figure 3, la première languette 20a comprend la fente de réception 39, précédemment évoquée et apte à coopérer avec l'ergot 38 de la première rainure 30a, visible à la figure 2. La fente de réception 39 est formée depuis le bord inférieur 62 de la première languette 20a et présente une forme complémentaire à l'ergot 38 de la première rainure 30a.

La forme évasée de cette fente de réception est comme indiqué précédemment complémentaire à la forme de l'ergot 38, le plan incliné formé par l'évasement de la fente 39 facilitant l'insertion de l'ergot dans cette fente 39.

De manière plus précise, la fente de réception 39 comprend une forme évasée au voisinage du bord inférieur 64 de la première languette 20a et une forme droite à l'opposé de ce bord inférieur 64, et l'ergot 38 comprend de manière complémentaire une forme de section triangulaire au voisinage de la paroi de fond et une forme droite à l'opposé de cette paroi de fond. La forme évasée permet dans un premier temps de guider le montage de la première languette 20a dans la première rainure 30a, la forme droite de l'ergot s'insérant dans la forme évasée de la fente de réception. Une fois la première languette 20a insérée dans la première rainure 30 a, avec le bord inférieur 64 de la première languette 20a contre la paroi de fond de la première rainure 30a, la complémentarité de formes entre l'ergot 38 et la fente de réception 39 de la première languette 20a permet de bloquer en position ladite première languette 20a dans la première rainure 30a suivant la direction transversale T du système d'échange thermique 1.

Sur la figure 3, on définit une première dimension verticale DV1 et une deuxième dimension verticale DV2 respectivement de la paroi de fixation 60 de la première languette 20a et de la paroi de fixation 60 de la deuxième languette 20b, les dimensions verticales DV1, DV2 étant considérées le long d'une droite parallèle à la direction verticale V du système d'échange thermique. La première dimension verticale DV1 et la deuxième dimension verticale DV2 présentent ici des valeurs différentes l'une de l'autre. Plus précisément, dans l'exemple illustré, la deuxième dimension verticale DV2 présente une valeur inférieure à celle de la première dimension verticale DV1.

La deuxième dimension verticale DV2 de la deuxième languette 20b est définie de telle sorte que, lorsque le bord inférieur 64 de la deuxième languette 20b est contre la paroi de fond de la deuxième rainure 30b, le bord supérieur 62 de cette deuxième languette 20b soit au contact de la surépaisseur du doigt d'encliquetage, cette surépaisseur recouvrant le bord supérieur 62 de la deuxième languette pour que le doigt d'encliquetage bloque ladite deuxième languette 20b en position suivant la direction verticale V du système d'échange thermique 1.

La différence entre la première dimension verticale DV1 et la deuxième dimension verticale DV2 participe à former un moyen de détrompage de la première languette 20a et de la deuxième languette 20b pour leur montage sur la patte de fixation du support 2, seule la deuxième languette 20b, présentant ladite deuxième dimension verticale DV2, étant apte à venir se loger dans la deuxième rainure 30b avec le doigt d'encliquetage 44 reprenant sa position d'origine pour venir bloquer verticalement la languette présente dans la deuxième rainure.

On définit également une première épaisseur E1 de la paroi de fixation 60 de la première languette 20a, et une deuxième épaisseur E2 de la zone de fixation 68 de la paroi de fixation 60 de la deuxième languette 20b, chacune des épaisseurs E1, E2 étant considérée le long d'une droite parallèle à la direction longitudinale L du système d'échange thermique.

On définit par ailleurs, tel qu'illustré sur la figure 2, une première dimension longitudinale D1 de la première rainure 30a et une deuxième dimension longitudinale D2 de la deuxième rainure 30b, considérées le long d'une droite qui s'étend suivant la direction longitudinale L du système d'échange thermique. On comprend alors que la première dimension longitudinale D1 et la deuxième dimension longitudinale D2 présentent des valeurs respectivement légèrement supérieures aux valeurs de la première épaisseur E1 et de la deuxième épaisseur E2 précédemment évoquées, afin que la première languette 20a puisse venir loger et être maintenue longitudinalement dans la première rainure 30a et que la deuxième languette 20a puisse venir loger et être maintenue longitudinalement dans la deuxième rainure 30a.

La première épaisseur E1 et la deuxième épaisseur E2 peuvent présenter des valeurs différentes l'une de l'autre, et de manière correspondante la première dimension longitudinale D1 et la deuxième dimension longitudinale D2 peuvent présenter des valeurs différentes l'une de l'autre. On peut former de la sorte un autre moyen de détrompage, permettant de s'assurer du montage correct du premier échangeur de chaleur 4 et du deuxième échangeur de chaleur 6 sur le support. L'échangeur de chaleur dont la languette de fixation présente une épaisseur de valeur supérieure à l'autre languette de fixation ne peut en effet pas être inséré dans la rainure qui ne lui est pas destinée.

Tel que cela est visible sur l'exemple de réalisation de l'invention, chacune des bases 58 de chacune des languettes 20a, 20b présente une épaisseur de base EB, considérée le long d'une droite parallèle à la direction longitudinale L du système d'échange thermique, qui est supérieure à la première épaisseur E1 et la deuxième épaisseur E2 respectivement de la première languette 20a et de la deuxième languette 20b. Une telle caractéristique permet notamment de consolider les languettes 20a, 20b et plus précisément leur fixation sur leur échangeur de chaleur 4, 6 respectif.

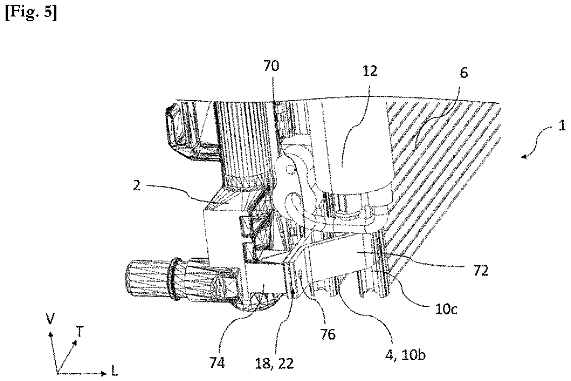

La au moins une fixation additionnelle 22 du premier échangeur de chaleur 4 et du deuxième échangeur de chaleur 6 sur le support 2 va maintenant être décrite plus en détail en référence aux figures 1 et 5.

Le premier échangeur de chaleur 4 et le deuxième échangeur de chaleur 6 comprennent respectivement une première fixation additionnelle 70 et une deuxième fixation additionnelle 72. La première fixation additionnelle 70 et la deuxième fixation additionnelle 72 s'étendent respectivement depuis la deuxième paroi latérale 10b du premier échangeur de chaleur 4 et depuis la troisième paroi latérale 10c du deuxième échangeur de chaleur 6, et en regard l'une de l'autre.

La première fixation additionnelle 70 s'étend suivant la direction transversale T du système d'échange thermique 1 et dans un plan commun avec le premier plan principal P1 du premier échangeur de chaleur 4. La deuxième fixation additionnelle 72 s'étend au moins en partie dans un plan sécant du deuxième plan principal P2 du deuxième échangeur de chaleur 6 et de telle sorte qu'une extrémité libre de la deuxième fixation additionnelle 72 soit au contact de la première fixation additionnelle 70. On comprend alors que la première fixation additionnelle 70 et la deuxième fixation additionnelle 72 sont en contact l'une de l'autre et coopèrent avec un moyen de fixation additionnel du support 74.

Plus particulièrement, chacune de la première fixation additionnelle 70 et de la deuxième fixation additionnelle 72 comprend un orifice de fixation 76 formé en regard l'un de l'autre et en regard d'un orifice taraudé, non visible, du moyen de fixation additionnel du support 74 de telle sorte qu'une vis de fixation peut rendre solidaire les deux fixations additionnelles simultanément sur le moyen de fixation additionnel du support 74. On permet ainsi la fixation du premier échangeur de chaleur 4 et du deuxième échangeur de chaleur 6 sur le support 2 au niveau de la deuxième extrémité transversale 28b du système d'échange thermique, opposée transversalement aux languettes de fixation 20a, 20b.

On comprend par ailleurs que les moyens de fixation 18 du premier échangeur de chaleur 4 et du deuxième échangeur de chaleur 6 sur le support 2 ne sont pas limités à ceux décrit dans la présente demande et peuvent comprendre d'autres moyens de fixation 18 telle que des parois de fixation percées 78, représentées à la figure 1, et aptes à coopérer avec des trous de fixation formés sur le support. Ces parois de fixation percées 78 sont notamment agencées sur le système d'échange thermique 1 à l'opposé verticalement des languettes 20a, 20b et des fixations additionnelles 22 afin d'assurer un maintien optimal du premier échangeur de chaleur 4 et du deuxième échangeur de chaleur 6 sur le support 2 en répartissant les moyens de fixation verticalement entre la première extrémité verticale 32a et la deuxième extrémité verticale 32b du système d'échange thermique 1.

Un procédé de montage du système d'échange thermique 1 va maintenant être décrit en rapport avec les figures 1 à 5.

Le procédé de montage comprend notamment une première étape au cours de laquelle on dispose le premier échangeur de chaleur 4 par translation verticale le long du support 2 de telle sorte que la première languette 20a se loge au moins en partie dans la première rainure 30a de la patte de fixation 26. De manière plus précise, on translate verticalement le premier échangeur de chaleur 4 de telle sorte que la paroi de fixation 60 de la première languette 20a se loge dans la première rainure 30a. Le déplacement vertical du premier échangeur de chaleur se continue jusqu'à ce que le premier échangeur de chaleur soit dans une position finale, avec le bord inférieur de la première languette soit au contact de la paroi de fond de la première rainure 30a, cela étant rendu possible par la coopération de formes entre la fente de réception 39 et l'ergot 38.

Dans cette position finale, le moyen de fixation additionnelle 22 et l'au moins une paroi de fixation percée 78 du premier échangeur de chaleur 20a sont en face du moyen de fixation associé du support et une étape intermédiaire de vissage peut avoir lieu au niveau de la paroi de fixation percée pour assurer la position du premier échangeur de chaleur 4 le temps que le deuxième échangeur de chaleur soit installé.

On dispose alors le deuxième échangeur de chaleur 6 par translation verticale contre le premier échangeur de chaleur 4 de telle sorte que la deuxième languette 20b de fixation se loge au moins en partie dans la deuxième rainure 30b de la patte de fixation 26. De manière plus précise, on translate verticalement le deuxième échangeur de chaleur 6 de telle sorte que la zone de fixation 68 de la paroi de fixation 60 de la deuxième languette 20b entre en contact du chanfrein 50 de la surépaisseur 48 du doigt d'encliquetage 44 et déforme ledit doigt d'encliquetage 44 dans le sens opposé au support 2. Une telle déformation du doigt d'encliquetage 44 permet le passage de la zone de fixation 68 de la paroi de fixation 60 de la deuxième languette 20b, guidée par le chanfrein de bord d'extrémité 56 de la paroi de séparation 52. Le déplacement vertical du deuxième échangeur de chaleur se continue jusqu'à ce que le deuxième échangeur de chaleur soit dans une position finale, avec le bord inférieur de la deuxième languette soit au contact de la paroi de fond de la deuxième rainure 30b, le doigt d'encliquetage reprenant alors sa position initiale et la surépaisseur 48 venant bloquer en position la deuxième languette 20b.

Dans cette position finale, le moyen de fixation additionnelle 22 du deuxième échangeur de chaleur 20b est en face du moyen de fixation additionnelle 22 du premier échangeur de chaleur 20b et une vis de serrage peut solidariser les deux échangeurs de chaleur sur un même bloc support via un orifice taraudé commun aux deux échangeurs de chaleur.

Tel que cela vient d'être décrit, aussi bien pour le procédé de montage que pour la structure du système d'échange thermique, on comprend que l'on tire avantage de la structure des languettes de fixation 20a, 20b et de la patte de fixation 26 en ce qu'elles assurent un montage simple du système d'échange thermique 1, en permettant notamment l'assemblage à la verticale du premier échangeur de chaleur 4 et du deuxième échangeur de chaleur 6 pour leur fixation sur une même patte de fixation 26 du support 2.

L'invention ne saurait toutefois se limiter aux moyens et configurations exclusivement décrits et illustrés, et s'applique également à tous les moyens ou configurations équivalents et à toute combinaison de tels moyens ou configurations.

## Revendications

1. Système d'échange thermique (1) comprenant au moins un support (2), un premier échangeur de chaleur (4) et un deuxième échangeur de chaleur (6), le premier échangeur de chaleur (4) et le deuxième échangeur de chaleur (6) s'étendant chacun dans un plan principal (P, P1, P2) transversal (T) et vertical (V), le premier échangeur de chaleur (4) étant disposé, suivant une direction longitudinale (L) du système d'échange thermique (1), entre le support (2) et le deuxième échangeur de chaleur (6), chacun du premier échangeur de chaleur (4) et du deuxième échangeur de chaleur (6) étant fixé sur le support (2) via des moyens de fixation (18) parmi lesquels au moins une languette (20a, 20b) portée par chacun de ces échangeurs et configurée pour coopérer avec une patte de fixation du support, le système d'échange thermique (1) étant **caractérisé en ce que** le premier échangeur de chaleur (4) comprend une première languette (20a) et le deuxième échangeur de chaleur (6) comprend une deuxième languette (20b), la première languette (20a) et la deuxième languette (20b) s'étendant chacune depuis une extrémité transversale respectivement du premier échangeur de chaleur (4) et du deuxième échangeur de chaleur (6) et en regard l'une de l'autre, chacune de la première languette (20a) et de la deuxième languette (20b) coopérant avec une patte de fixation (26) commune du support (2).

2. Système d'échange thermique (1) selon la revendication précédente, dans lequel chacune de la première languette (20a) et de la deuxième languette (20b) comprend une base (58) et une paroi de fixation (60), la base (58) de la première languette (20a) et la base de la deuxième languette (20b) étant respectivement solidaire du premier échangeur de chaleur (4) et du deuxième échangeur de chaleur (6), les parois de fixation (60) s'étendant chacune depuis leur base (58) respective et de telle sorte qu'elles coopèrent avec la patte de fixation (26) commune du support (2).

3. Système d'échange thermique (1) selon la revendication précédente, dans lequel la paroi de fixation (60) de la deuxième languette (20b) comprend une zone coudée (66) qui s'étend depuis sa base (58) et une zone de fixation (68) qui s'étend depuis la zone coudée (66), à l'opposé de la base (58), la zone de fixation (68) s'étendant dans un plan de fixation (PF) parallèle et à distance du plan principal (P2) transversal (T) et vertical (V) du deuxième échangeur de chaleur (6).

4. Système d'échange thermique (1) selon la revendication précédente, dans lequel la zone coudée (66) s'étend vers le support (2) du système d'échange thermique (1).

5. Système d'échange thermique (1) selon l'une quelconque des revendications 3 ou 4, dans lequel la paroi de fixation (60) de la première languette (20a) et la zone de fixation (68) de la paroi de fixation (60) de la deuxième languette (20b) s'étendent chacune dans un plan parallèle aux plans principaux (P1, P2) du premier échangeur de chaleur (4) et du deuxième échangeur de chaleur (6).

6. Système d'échange thermique (1) selon l'une quelconque des revendications précédentes, dans lequel la patte de fixation (26) du support (2) s'étend depuis une extrémité transversale du support (2) suivant la direction longitudinale (L) et comprend au moins une première rainure (30a) et une deuxième rainure (30b), aptes à loger respectivement au moins une partie de la première languette (20a) et au moins une partie de la deuxième languette (20b).

7. Système d'échange thermique (1) selon la revendication précédente en combinaison avec l'une des revendications 3 à 5, dans lequel la première rainure (30a) et la deuxième rainure (30b) sont configurées pour coopérer respectivement avec la paroi de fixation (60) de la première languette (20a) et la zone de fixation (68) de la paroi de fixation (60) de la deuxième languette (20b).

8. Système d'échange thermique (1) selon l'une quelconque des revendications 6 ou 7, dans lequel on définit une première extrémité verticale (32a) et une deuxième extrémité verticale (32b) du système d'échange thermique (1), opposée l'une de l'autre suivant la direction verticale (V), chacune de la première rainure (30a) et de la deuxième rainure (30b) de la patte de fixation (26) commune du support (2) comprenant une ouverture tournée vers une même extrémité verticale (32a, 32b) du système d'échange thermique (1).

9. Système d'échange thermique selon l'une quelconque des revendications 6 à 8, dans lequel la patte de fixation (26) commune du support (2) comprend, à une extrémité libre opposée au support (2), une paroi d'extrémité (40) qui participe à délimiter la deuxième rainure (30b), la paroi d'extrémité (40) comprenant au moins un doigt d'encliquetage (44) déformable élastiquement agencé en travers de la deuxième rainure (30b).

10. Procédé de montage du système d'échange thermique (1) selon l'une quelconque des revendications précédentes en combinaison avec l'une quelconque des revendications 6 à 9, procédé de montage au cours duquel à une première étape on dispose le premier échangeur de chaleur (4) par une translation verticale le long du support (2) de telle sorte que la première languette (20a) se loge au moins en partie dans la première rainure (30a) de la patte de fixation (26) du support (2), et à une deuxième étape on dispose le deuxième échangeur de chaleur (6) par translation verticale contre le premier échangeur de chaleur (4) de telle sorte que la deuxième languette (20b) se loge au moins en partie dans la deuxième rainure (30b) de la patte de fixation (26) du support (2).

## Patentansprüche

1. Wärmetauschersystem (1) mit mindestens einem Träger (2), einem ersten Wärmetauscher (4) und einem zweiten Wärmetauscher (6), wobei sich der erste Wärmetauscher (4) und der zweite Wärmetauscher (6) jeweils in einer quer (T) und vertikal (V) verlaufenden Hauptebene (P, P1, P2) erstrecken, wobei der erste Wärmetauscher (4) entlang einer Längsrichtung (L) des Wärmetauschersystems (1) zwischen dem Träger (2) und dem zweiten Wärmetauscher (6) angeordnet ist, wobei jeder des ersten Wärmetauschers (4) und des zweiten Wärmetauschers (6) an dem Träger (2) über Befestigungsmittel (18) befestigt ist, von denen mindestens eines eine Zunge (20a, 20b) ist, die von jedem dieser Wärmetauscher getragen wird und so konfiguriert ist, dass sie mit einer Befestigungslasche des Trägers zusammenwirkt, wobei das Wärmetauschersystem (1) **dadurch gekennzeichnet ist, dass** der erste Wärmetauscher (4) eine erste Zunge (20a) und der zweite Wärmetauscher (6) eine zweite Zunge (20b) aufweist, wobei die erste Zunge (20a) und die zweite Zunge (20b) sich jeweils von einem Querende des ersten Wärmetauschers (4) bzw. des zweiten Wärmetauschers (6) aus und einander gegenüberliegend erstrecken, wobei jede der ersten Zunge (20a) und der zweiten Zunge (20b) mit einer gemeinsamen Befestigungslasche (26) des Trägers (2) zusammenwirkt.

2. Wärmetauschersystem (1) nach dem vorhergehenden Anspruch, wobei jede der ersten Zunge (20a) und der zweiten Zunge (20b) eine Basis (58) und eine Befestigungswand (60) aufweist, wobei die Basis (58) der ersten Zunge (20a) und die Basis der zweiten Zunge (20b) jeweils fest mit dem ersten Wärmetauscher (4) und dem zweiten Wärmetauscher (6) verbunden sind, wobei sich die Befestigungswände (60) jeweils von ihrer jeweiligen Basis (58) aus so erstrecken, dass sie mit der gemeinsamen Befestigungslasche (26) des Trägers (2) zusammenwirken.

3. Wärmetauschersystem (1) nach dem vorhergehenden Anspruch, wobei die Befestigungswand (60) der zweiten Zunge (20b) einen abgewinkelten Bereich (66) aufweist, der sich von ihrer Basis (58) aus erstreckt, und einen Befestigungsbereich (68), der sich von dem abgewinkelten Bereich (66) aus gegenüber der Basis (58) erstreckt, wobei sich der Befestigungsbereich (68) in einer Befestigungsebene (PF) parallel und in einem Abstand von der quer (T) und vertikal (V) verlaufenden Hauptebene (P2) des zweiten Wärmetauschers (6) erstreckt.

4. Wärmetauschersystem (1) nach dem vorhergehenden Anspruch, wobei sich der abgewinkelte Bereich (66) in Richtung des Trägers (2) des Wärmetauschersystems (1) erstreckt.

5. Wärmetauschersystem (1) nach einem der Ansprüche 3 oder 4, wobei sich die Befestigungswand (60) der ersten Zunge (20a) und der Befestigungsbereich (68) der Befestigungswand (60) der zweiten Zunge (20b) jeweils in einer Ebene parallel zu den Hauptebenen (P1, P2) des ersten Wärmetauschers (4) und des zweiten Wärmetauschers (6) erstrecken.

6. Wärmetauschersystem (1) nach einem der vorhergehenden Ansprüche, wobei sich die Befestigungslasche (26) des Trägers (2) von einem Querende des Trägers (2) aus entlang der Längsrichtung (L) erstreckt und mindestens eine erste Nut (30a) und eine zweite Nut (30b) aufweist, die geeignet sind, jeweils mindestens einen Teil der ersten Zunge (20a) bzw. mindestens einen Teil der zweiten Zunge (20b) aufzunehmen.

7. Wärmetauschersystem (1) nach dem vorhergehenden Anspruch in Kombination mit einem der Ansprüche 3 bis 5, wobei die erste Nut (30a) und die zweite Nut (30b) so gestaltet sind, dass sie jeweils mit der Befestigungswand (60) der ersten Zunge (20a) bzw. dem Befestigungsbereich (68) der Befestigungswand (60) der zweiten Zunge (20b) zusammenwirken.

8. Wärmetauschersystem (1) nach einem der Ansprüche 6 oder 7, wobei ein erstes vertikales Ende (32a) und ein zweites vertikales Ende (32b) des Wärmetauschersystems (1) definiert werden, die einander entlang der vertikalen Richtung (V) gegenüberliegen, wobei jede der ersten Nut (30a) und der zweiten Nut (30b) der gemeinsamen Befestigungslasche (26) des Trägers (2) eine Öffnung aufweist, die zu einem gleichen vertikalen Ende (32a, 32b) des Wärmetauschersystems (1) gerichtet ist.

9. Wärmetauschersystem nach einem der Ansprüche 6 bis 8, wobei die gemeinsame Befestigungslasche (26) des Trägers (2) an einem dem Träger (2) gegenüberliegenden freien Ende eine Endwand (40) aufweist, die an der Begrenzung der zweiten Nut (30b) beteiligt ist, wobei die Endwand (40) mindestens einen elastisch verformbaren Rastfinger (44) aufweist, der quer über der zweite Nut (30b) angeordnet ist.

10. Verfahren zur Montage des Wärmetauschersystems (1) nach einem der vorhergehenden Ansprüche in Kombination mit einem der Ansprüche 6 bis 9, wobei bei dem Montageverfahren in einem ersten Schritt der erste Wärmetauscher (4) durch eine vertikale Verschiebung entlang des Trägers (2) so angeordnet wird, dass die erste Zunge (20a) zumindest teilweise in der ersten Nut (30a) der Befestigungslasche (26) des Trägers (2) aufgenommen wird, und in einem zweiten Schritt der zweite Wärmetauscher (6) durch vertikale Verschiebung gegen den ersten Wärmetauscher (4) so angeordnet wird, dass die zweite Zunge (20b) zumindest teilweise in der zweiten Nut (30b) der Befestigungslasche (26) des Trägers (2) aufgenommen wird.

## Claims

1. Heat exchange system (1) comprising at least one support (2), a first heat exchanger (4) and a second heat exchanger (6), the first heat exchanger (4) and the second heat exchanger (6) each extending in a main plane (P, P1, P2) which is transverse (T) and vertical (V), the first heat exchanger (4) being disposed, in a longitudinal direction (L) of the heat exchange system (1), between the support (2) and the second heat exchanger (6), each of the first heat exchanger (4) and the second heat exchanger (6) being fixed to the support (2) via fixing means (18) including at least one tongue (20a, 20b) borne by each of these exchangers and configured to engage with a fixing tab of the support, the heat exchange system (1) being **characterized in that** the first heat exchanger (4) comprises a first tongue (20a) and the second heat exchanger (6) comprises a second tongue (20b), the first tongue (20a) and the second tongue (20b) each extending from a transverse end of the first heat exchanger (4) and the second heat exchanger (6), respectively, and facing one another, each of the first tongue (20a) and the second tongue (20b) engaging with a common fixing tab (26) of the support (2).

2. Heat exchange system (1) according to the preceding claim, wherein each of the first tongue (20a) and the second tongue (20b) comprises a base (58) and a fixing wall (60), the base (58) of the first tongue (20a) and the base of the second tongue (20b) being secured to the first heat exchanger (4) and the second heat exchanger (6), respectively, the fixing walls (60) each extending from their respective base (58) such that they engage with the common fixing tab (26) of the support (2).

3. Heat exchange system (1) according to the preceding claim, wherein the fixing wall (60) of the second tongue (20b) comprises a bent zone (66) which extends from its base (58) and a fixing zone (68) which extends from the bent zone (66), away from the base (58), the fixing zone (68) extending in a fixing plane (PF) parallel to and spaced apart from the main plane (P2), which is transverse (T) and vertical (V), of the second heat exchanger (6).

4. Heat exchange system (1) according to the preceding claim, wherein the bent zone (66) extends towards the support (2) of the heat exchange system (1).

5. Heat exchange system (1) according to either one of Claims 3 and 4, wherein the fixing wall (60) of the first tongue (20a) and the fixing zone (68) of the fixing wall (60) of the second tongue (20b) each extend in a plane parallel to the main planes (P1, P2) of the first heat exchanger (4) and the second heat exchanger (6).

6. Heat exchange system (1) according to any one of the preceding claims, wherein the fixing tab (26) of the support (2) extends from a transverse end of the support (2) in the longitudinal direction (L) and comprises at least a first groove (30a) and a second groove (30b) which are capable of receiving at least part of the first tongue (20a) and at least part of the second tongue (20b), respectively.

7. Heat exchange system (1) according to the preceding claim in combination with one of Claims 3 to 5, wherein the first groove (30a) and the second groove (30b) are configured to engage with the fixing wall (60) of the first tongue (20a) and the fixing zone (68) of the fixing wall (60) of the second tongue (20b), respectively.

8. Heat exchange system (1) according to either one of Claims 6 and 7, wherein a first vertical end (32a) and a second vertical end (32b) of the heat exchange system (1), which are opposite one another in the vertical direction (V), are defined, each of the first groove (30a) and the second groove (30b) of the common fixing tab (26) of the support (2) comprising an opening facing one and the same vertical end (32a, 32b) of the heat exchange system (1).

9. Heat exchange system according to any one of Claims 6 to 8, wherein the common fixing tab (26) of the support (2) comprises, at a free end opposite to the support (2), an end wall (40) which contributes to delimiting the second groove (30b), the end wall (40) comprising at least one elastically deformable snap-fastening finger (44) arranged through the second groove (30b).

10. Method for mounting the heat exchange system (1) according to any one of the preceding claims in combination with any one of Claims 6 to 9, during which mounting method, in a first step, the first heat exchanger (4) is disposed by way of a vertical translational movement along the support (2) such that the first tongue (20a) is received at least partially in the first groove (30a) of the fixing tab (26) of the support (2), and, in a second step, the second heat exchanger (6) is disposed by way of a vertical translational movement against the first heat exchanger (4) such that the second tongue (20b) is received at least partially in the second groove (30b) of the fixing tab (26) of the support (2).
